# DEMANDE DE BREVET EUROPEEN

(11) **EP 1 885 095 A1**
(43) Date de publication de la demande: **06.02.2008**
(21) Numéro de dépôt: 06118345.5
(22) Date de dépôt: 02.08.2006
(51) Int. Cl.: H04L 29/06

(54) **Méthode d'accès conditionnel local pour équipements mobiles**

(71) Demandeur: Nagravision S.A., 1033 Cheseaux-sur-Lausanne (CH)
(72) Inventeur: Moreillon, Guy, Bioley-Orjulaz 1042 (CH)
(74) Mandataire: Wenger, Joel-Théophile

(57) **Abrégé**

Le but de la présente invention est de pouvoir disposer des mêmes moyens de restriction dans le monde mobile que ce qui est appliqué avec des récepteurs fixes.

Ce but est atteint par une méthode d'accès conditionnel à un flux de données numériques encryptées avec au moins un mot de contrôle et diffusé via un émetteur d'un réseau de diffusion à au moins un équipement mobile, cet émetteur transmettant également un flux de messages de contrôle contenant les mots de contrôle et les conditions d'accès, cet équipement mobile étant également connecté à un réseau de communication mobile via un point d'accès mobile, ladite méthode est caractérisée en ce qu'elle comprend les étapes suivantes:
- réception par l'équipement mobile du flux de messages de contrôle,
- détermination d'un identifiant de localisation dudit mobile soit par l'identifiant du point d'accès mobile, soit par l'identifiant de l'émetteur du réseau de diffusion,
- vérification des conditions d'accès contenues dans le message de contrôle, lesdites conditions comprenant une condition de réception liée à au moins un identifiant de point d'accès mobile et/ou d'un identifiant d'émetteur du réseau de diffusion,
- comparaison entre l'identifiant de localisation avec le ou les identifiants contenues dans les conditions d'accès,
- blocage de l'accès audit flux de données si la comparaison est positive

## Description

### Domaine technique

L'invention concerne le domaine de l'accès conditionnel à un flux de données numériques diffusé par voie hertzienne et reçu par une pluralité d'équipements mobiles, tels que, par exemple, un téléphone portable, un assistant personnel PDA (Personal Digital Assistant), un récepteur portable de télévision numérique, un ordinateur portable.

Les données diffusées sont cryptées et ne peuvent être reçues en clair que par des équipements autorisés dont l'utilisateur a acquis les droits nécessaires. Ces droits, stockés dans un module de sécurité associé à l'équipement mobile, consistent en un ensemble de clés permettant de décrypter des mots de contrôles contenus dans des messages de contrôle ECM (Entitlement Control Message) diffusés dans le flux des données audio / vidéo.

Un module de sécurité est un dispositif réputé inviolable contenant diverses clés d'encryption/décryption, des informations servant à identifier un utilisateur sur un réseau et des données qui définissent des droits acquis par l'utilisateur pour la réception d'un contenu diffusé. Le module de sécurité peut se trouver sous différentes formes telles qu'une carte à puce amovible insérée dans un lecteur, un circuit intégré soudé sur une carte mère, une carte du type SIM (Subscriber Identity Module) que l'on rencontre dans la plupart des équipements mobiles.

### Arrière plan technique

Actuellement les équipements mobiles configurés pour la réception de programmes de télévision numérique sont basés sur des technologies normalisées telles que OMA (Open Mobile Alliance), DVB-H (Digital Video Broadcast, Handheld), ou DMB (Digital Multimedia Broadcasting) qui est en quelque sorte une extension à large bande de DAB (Digital Audio Broadcasting).

La technologie OMA met en oeuvre une solution complète unique pour un marché donné comme celui des téléphones portables où chaque équipement et les fournisseurs de contenu supportent la technologie OMA.

La technologie DVB a été conçue pour normaliser les décodeurs de télévision numériques (set top boxes) dans le but de réduire leurs coûts à grande échelle. Elle normalise les éléments intervenant au niveau de l'accès conditionnel au contenu diffusé dans le format MPEG-2 ou MPEG-4 pour la télévision mobile sur Internet. Ces éléments consistent en l'algorithme d'encryption du contenu diffusé, les messages de contrôle ECM contenant les clés de décryption ou mots de contrôle, les messages d'administration EMM contenant les droits des utilisateurs et l'interface entre le décodeur et le module de sécurité gérant l'accès conditionnel.

Dans le cas particulier de la télévision mobile DVB-H, la protection du contenu est développée par le groupe DVB-CBMS (Digital Video Broadcasting - Convergence of Broadcast and Mobile Services).

La normalisation ne s'étend ni au contenu à valeur ajoutée des messages ECM et EMM, ni à la méthode de protection de ceux-ci. Chaque fournisseur d'accès conditionnel utilise sa propre structure de données et ses propres moyens de protection pour un même contenu diffusé. La technologie DVB offre donc de nombreuses possibilités de développement de la sécurité du contenu.

Il est bien connu de permettre à un diffuseur de gérer la réception d'un événement selon l'emplacement géographique. En effet, les diffuseurs souhaitent interdire l'accès à un contenu tel qu'une retransmission sportive dans les alentours du lieu où se déroule cet événement. Ainsi, par la connaissance de l'emplacement de chaque récepteur, une commande dite de « blackout » est envoyée au récepteur avec par exemple le ou les codes postaux qui ne peuvent visualiser l'événement en direct. Le module de sécurité du récepteur qui détient l'information de localisation (par exemple le code postal de l'abonné au service), recevant ce message, va donc appliquer une nouvelle règle lors de la vérification des droits et même si le récepteur dispose des droits pour cet événement, le message de « blackout » a priorité pour interdire l'accès à l'événement en ne renvoyant pas les mots de contrôle qui ont servi à encrypter l'événement.

Néanmoins, dans l'univers mobile, cette notion de "code postal" n'a plus cours et il n'est pas possible d'interdire une réception sur un tel dispositif portable.

### Description de l'invention

Le but de la présente invention est de pouvoir disposer des mêmes moyens de restriction dans le monde mobile que ce qui est appliqué avec des récepteurs fixes.

Ce but est atteint par une méthode d'accès conditionnel à un flux de données numériques encryptées avec au moins un mot de contrôle et diffusé via un émetteur d'un réseau de diffusion à au moins un équipement mobile, cet émetteur transmettant également un flux de messages de contrôle contenant les mots de contrôle et les conditions d'accès, cet équipement mobile étant également connecté à un réseau de communication mobile via un point d'accès mobile, ladite méthode est caractérisée en ce qu'elle comprend les étapes suivantes:
- réception par l'équipement mobile du flux de messages de contrôle,
- détermination d'un identifiant de localisation dudit mobile soit par l'identifiant du point d'accès mobile, soit par l'identifiant de l'émetteur du réseau de diffusion,
- vérification des conditions d'accès contenues dans le message de contrôle, lesdites conditions comprenant une condition de réception liée à au moins un identifiant de point d'accès mobile et/ou d'un identifiant d'émetteur du réseau de diffusion,
- comparaison entre l'identifiant de localisation avec le ou les identifiants contenues dans les conditions d'accès,
- blocage de l'accès audit flux de données si la comparaison est positive.

Selon le mode de réalisation, la manière pour déterminer l'identifiant de localisation peut être basée sur l'identifiant de la cellule mobile (point d'accès mobile) ou l'identifiant de l'émetteur du réseau de diffusion.

Dans le premier cas, il est fort probable que la précision de localisation soit plus précise en raison de la faible portée des point d'accès mobile.

Dans le second cas, le réseau de diffusion comprend une pluralité d'émetteur qui en plus de diffuser le flux de données, diffuse des données de service dans lesquelles il est possible d'identifier l'émetteur sur lequel est calé l'équipement mobile.

### Brève description des figures

L'invention sera mieux comprise grâce à la description détaillée qui va suivre et qui se réfère aux figures annexées données à titre d'exemples nullement limitatifs.

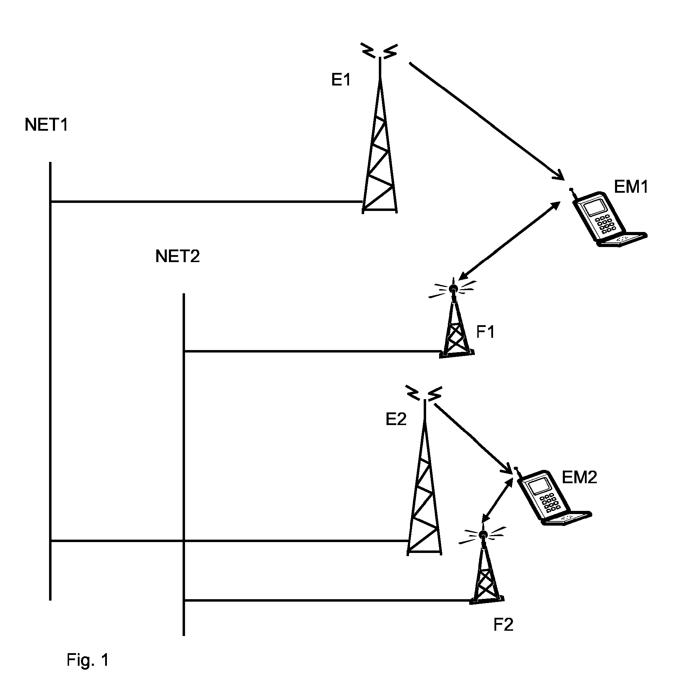

- La figure 1 illustre un schéma bloc d'un exemple de configuration avec deux émetteurs placés en des lieux distincts et pouvant être captés par un équipement mobile local.
- La figure 2 illustre un exemple schématisé de zones de diffusion des émetteurs du réseau diffusion et des cellules du réseau mobile à l'intérieur de ces zones de diffusion.

### Description détaillée de l'invention

Un flux de données numériques formant un contenu (C) encrypté avec des mots de contrôle (CW) sont diffusées avec des messages de contrôle ECM. Ces données numériques peuvent aussi bien comprendre des données audio/vidéo de programmes de télévision que des données correspondant à des applications pouvant être exploitées par un équipement mobile.

Un serveur d'un fournisseur de contenus à accès conditionnel est connecté à un réseau de diffusion (NET1). Ce réseau diffuse par plusieurs antennes E1, E2 vers des équipements mobiles EM1, EM2. Selon la localisation de l'équipement mobile, ce dernier ce connectera plutôt sur l'antenne E1 que l'antenne E2.

De la même manière, les équipements mobiles EM1, EM2 sont reliés au réseau de télécommunication mobile NET2 par des antennes appropriées F1, F2.

Que ce soit par le réseau d'antennes de diffusion E1, E2 ou par les antennes de télécommunication mobile F1, F2, l'équipement mobile peut déterminer sa position géographique. Dans le protocole de communication des deux systèmes de communication, l'identifiant de l'antenne est transmis à l'équipement mobile et sert donc d'identifiant de localisation. Cet identifiant est utilisé pour la mesure de la qualité de réception d'un réseau.

Cet identifiant en tant que tel ne donne pas nécessairement d'indication géographique et peut être une simple valeur alphanumérique.

Parallèlement, l'émetteur de diffusion envoie avec le flux de données audio/vidéo, un flux de données de messages de contrôle. Le message de contrôle contient le ou les mots de contrôle servant à décrypter le contenu encrypté et contient également les conditions d'accès à ce contenu.

Selon l'invention, les conditions d'accès comprennent, en plus des droits nécessaires à la réception du contenu (abonnement par exemple), un ou des identifiants d'antennes relatif à la zone d'interdiction de réception. Ces identifiants peuvent être relatifs au réseau de diffusion NET1 ou relatifs au réseau de télécommunication mobile NET2. On peut également inclure dans les conditions d'accès une liste conjointe comprenant un ou des identifiants des deux réseaux.

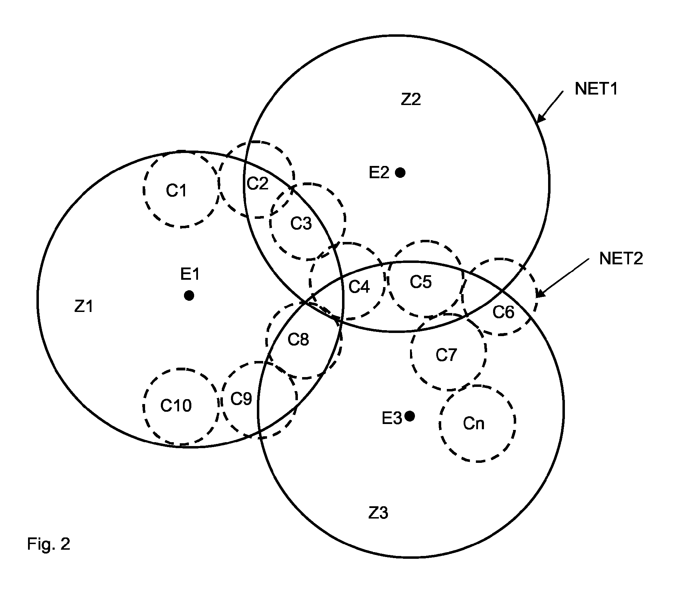

Comme on le voit sur la figure 2, il est préférable d'utiliser les identifiants du réseau de télécommunication mobile C1 à Cn. La couverture de chaque cellule est plus petite ce qui permet de mieux délimiter la zone d'interdiction. Néanmoins dans certaines circonstances, par exemple pour bloquer l'accès sur toute une ville, le plus simple est de le faire par les identifiants des quelques émetteurs de diffusion de cette ville.

Lorsqu'un message de contrôle arrive sur l'équipement mobile, ce message est transmis au moyens de sécurité de l'équipement. Ces moyens peuvent être soit la carte SIM de l'équipement mobile, soit un circuit spécialisé (directement soudé sur le circuit imprimé), soit être réalisé sous la forme logiciel. Ces moyens de sécurité vérifient si les conditions d'accès énumérées dans le message de contrôle sont remplies. Ces conditions peuvent avoir plusieurs formes, telles qu'un droit spécifique à un contenu, un droit général pour un canal donné ou un système de paiement par temps tel que décrit dans la demande WO03/085959. Selon l'invention, en plus des conditions telles que décrites précédemment, et pour autant que la réception du contenu soit limitée en fonction de l'emplacement géographique, les moyens de sécurité vérifient si l'identifiant de localisation obtenu de l'antenne de diffusion ou de télécommunication est présent dans la liste d'identifiants comprise dans le message de contrôle. Dans la négative, le mot de contrôle est envoyé au moyens de décryption du contenu.

En plus des réseaux de télécommunication connus tels que GSM, GPRS ou UMTS, d'autres moyens de localisation peuvent utilisés tels que par exemple Wifi, WiMax, Wibro, soit n'importe quel réseau disposant d'un ensemble d'antennes. La précision de localisation sera directement dépendante de la densité d'antennes. Il est à noter que l'identifiant contenu dans le message de contrôle peut englober une plage d'identifiants. Si par exemple les identifiants des antennes dans une ville commencent tous par ABC (ABCV120, ABCJ11 etc), il est possible d'envoyer uniquement le préfixe ABC pour englober toutes les antennes ABCxxx. D'autres possibilités peuvent inclure une plage telle que ABC100 à ABC200.

## Revendications

1. Méthode d'accès conditionnel à un flux de données numériques encryptées avec au moins un mot de contrôle et diffusé via un émetteur d'un réseau de diffusion à au moins un équipement mobile, cet émetteur transmettant également un flux de messages de contrôle contenant les mots de contrôle et les conditions d'accès, cet équipement mobile étant également connecté à un réseau de communication mobile via un point d'accès mobile, ladite méthode est **caractérisée en ce qu'**elle comprend les étapes suivantes:
- réception par l'équipement mobile du flux de messages de contrôle,
- détermination d'un identifiant de localisation dudit mobile soit par l'identifiant du point d'accès mobile, soit par l'identifiant de l'émetteur du réseau de diffusion,
- vérification des conditions d'accès contenues dans le message de contrôle, lesdites conditions comprenant une condition de réception liée à au moins un identifiant de point d'accès mobile et/ou d'un identifiant d'émetteur du réseau de diffusion,
- comparaison entre l'identifiant déterminé avec le ou les identifiants contenus dans les conditions d'accès,
- blocage de l'accès audit flux de données si la comparaison est positive.

2. Méthode selon la revendication 1, **caractérisée en ce que** l'identifiant de point d'accès mobile est extrait des données de service reçues dudit point d'accès mobile.

3. Méthode selon la revendication 1, **caractérisée en ce que** l'identifiant d'émetteur du réseau de diffusion est extrait des données de service reçues dudit d'émetteur du réseau de diffusion.

4. Méthode selon les revendications 1 à 3, **caractérisée en ce que** les conditions d'accès comprennent une liste des identifiants d'émetteur du réseau de diffusion.

5. Méthode selon les revendications 1 à 3, **caractérisée en ce que** les conditions d'accès comprennent une liste des identifiants de point d'accès mobile.

6. Méthode selon les revendications 1 à 5, **caractérisée en ce que** les conditions d'accès comprennent au moins une description d'un droit relatif au contenu diffusé et **en ce que** l'équipement mobile vérifie la présence de ce droit pour autoriser ou bloquer l'accès au contenu.

7. Méthode selon les revendications 1 à 6, **caractérisée en ce que** l'équipement mobile comprend des moyens de sécurité en charge du traitement des conditions d'accès.

8. Méthode selon l'uns des revendications 1 à 7, **caractérisée en ce que** le réseau de communication mobile est sélectionné selon l'un des types GSM, GPRS, UMTS, WiMax, Wifi, Wibro.

9. Méthode selon l'uns des revendications 1 à 7, **caractérisée en ce que** l'identifiant contenu dans les conditions d'accès définit une plage d'identifiants de localisation.
